# EUROPEAN PATENT SPECIFICATION

(11) **EP 0 556 064 B1**
(45) Date of publication and mention of the grant of the patent: **03.07.1996**
(21) Application number: 93301030.8
(22) Date of filing: 12.02.1993
(51) Int. Cl.: F16C 1/22

(54) **Control cable assembly**
Bowdenzug
Câble de commande

(30) Priority: 14.02.1992 GB 9203278
(43) Date of publication of application: 18.08.1993
(73) Proprietor: Acco Cable Controls Limited, Stourport-on-Severn DY13 9BB Worcestershire (GB)
(72) Inventor: Botham, Alan Samuel, Worcestershire DY13 9LR (GB)
(74) Representative: Lewis, David Overington

(56) References cited:
- EP-A- 0 234 814
- DE-A- 3 116 118
- DE-A- 3 129 603
- DE-A- 3 929 298
- FR-A- 2 580 745
- GB-A- 1 373 095
- US-A- 4 263 998
- US-A- 4 798 100
- US-A- 4 936 161

## Description

This invention relates to control cable assemblies and, more particularly, to adjuster devices insertable into control cable runs either adjacent terminations or at intermediate locations to provide tensioning of the cable run, such as in foot pedal operated, cable controlled, clutches or brake systems in motor vehicles as well as other forms of devices utilising flexible cable for transmission of motion.

In DE-A-3 929 298 there is disclosed a control cable assembly including a control cable run comprising conduit means and inner member means and provided with an adjuster device having an adjuster member connected through co-acting serrations to permit adjustment of the effective length of the conduit relative to the effective length of the inner member means, including an adjuster nut having a threaded portion connected to a threaded portion of the control cable run, an end piece making a sliding fit on a portion of the control cable run arranged to react through the adjuster nut an axial loading on the control cable run, the adjuster nut and the end piece being biassed apart so as to provide an initial gap between the adjuster nut and the end piece when the control cable run is not transmitting a loading.

By the present invention, the adjuster device includes a sleeve rotatably and slidably co-acting with the adjuster nut and the end piece limits relative axial displacement of the adjuster nut from the end piece and is formed with an internal shoulder provided with means arranged to drivingly contact means provided on the adjuster nut to transmit a rotational force from the sleeve to the adjuster nut.

A rotatable and slidable sleeve embracing the adjuster nut and the end piece may be provided to limit relative axial displacement of the adjuster nut from the end piece.

The invention will now be described, by way of example, with reference to the accompanying, partly diagrammatic, drawings, in which :-
Figure 1 is a cross-sectional view of a control cable run with an adjuster device positioned as a conduit termination, which is not in accordance with the invention;
Figure 2 is a cross-sectional view of a first form of the adjuster device in accordance with the invention;
Figure 3 is a cross-sectional view of the adjuster device shown in Figure 2 but in a different operating configuration, additionally indicating a drive for the adjuster device; and
Figure 4 is a cross-sectional view of another form of the adjuster device in a configuration positioned as an inner member termination.

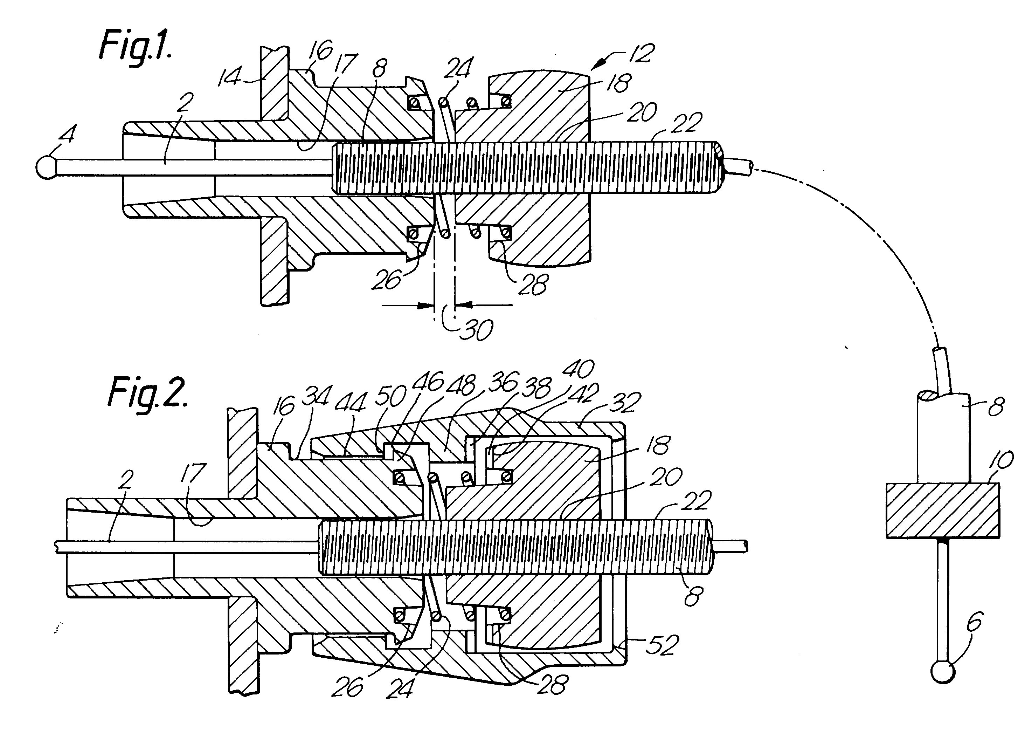

Referring to Figure 1 which illustrates some features of a control cable assembly, there is shown an inner core 2 of a control cable run extending along a curved pathe between a foot pedal connection 4 and a vehicle clutch connection 6, with an outer, wound wire, conduit 8 terminating at a fixed abutment 10 adjoining the vehicle clutch connection 6 and at an adjuster device 12 located through a bulkhead 14 adjoining the foot pedal connection 4. The adjuster device 12 includes a flanged end piece 16 arranged to be located through the bulkhead 14 with a shoulder seating on the bulkhead and having a central bore 17 forming a sliding fit with the wound wire conduit to provide radial support to the conduit and an adjuster nut 18 having an internal thread 20 co-acting as an interference fit with convolutions 22 formed on the wound wire conduit 8. A compression spring 24 seats in circular grooves 26, 28 in the flanged end piece 16 and the adjuster nut 18 and acts to urge the adjuster nut 18 away from the flanged end piece 16, thereby applying compression to the outer conduit 8 and tension to the inner core 2.

To assemble the control cable run, the assembly is positioned on the vehicle chassis, the conduit 8 secured to the fixed abutment 10, the flanged end piece 16 of the adjuster device 12 located in the bulkhead 14 and the inner core 2 secured to the foot pedal connection 4 and the vehicle clutch connection 6. The adjuster nut 18 is then rotated manually to move the outer conduit 8 axially of the inner core 2, as appropriate, to apply a requisite tension to the inner core 2 and space the adjuster nut 18 from the flanged end piece 16 by a predetermined dimension forming a gap 30.

In service, as the vehicle clutch plates wear, it is necessary to effectively lengthen the inner core 2 to accommodate the increased displacement of the vehicle clutch operating yoke (not shown) without affecting the range of travel of the foot pedal (not shown). This may be achieved by effectively shortening the outer conduit 8 by allowing the gap 30 to shorten, the stiffness of the spring 24 being selected having regard to the stiffness of other springs (not shown) acting on the control cable run at the foot pedal and the vehicle clutch. The gap 30 provides an amount of free play or lost motion at the foot pedal and, as the clutch cable plate wear progresses, becomes non-existent with the adjuster nut 18 abutting the flanged end piece 16 in the neutral position. Prior to this juncture, provided that there is sufficient clutch plate material remaining, the gap 30 is reinstated to the pre-determined dimension by rotating manually the adjuster nut 16, thereby permitting continued use.

It will be appreciated that the assembly may also be utilised in conjunction with other control cable installations such as those associated with vehicle brake systems in which it is necessary to effect adjustment to effectively shorten the inner core as brake pad wear occurs.

Whilst it is convenient to utilise the spring 24 to apply compressive loading to the conduit 8, and tension loading to the inner core 2, it will be appreciated that such loading may be applied at other locations and thus it is possible to dispense with the spring 24.

In the first embodiment according to the invention shown in Figure 2, adjustment is facilitated and extension of the device limited by means of a sleeve 32 slidably embracing a necked portion 34 of the flanged end piece 16 and the adjuster nut 18. The sleeve is formed with a first inwardly directed shoulder 36 provided with radial teeth 38 arranged to mesh with teeth 40 provided on an annular end face 42 of the adjuster nut 18 and a second inwardly directed shoulder 44 slidable on the necked portion 34 of the flanged end piece 16.

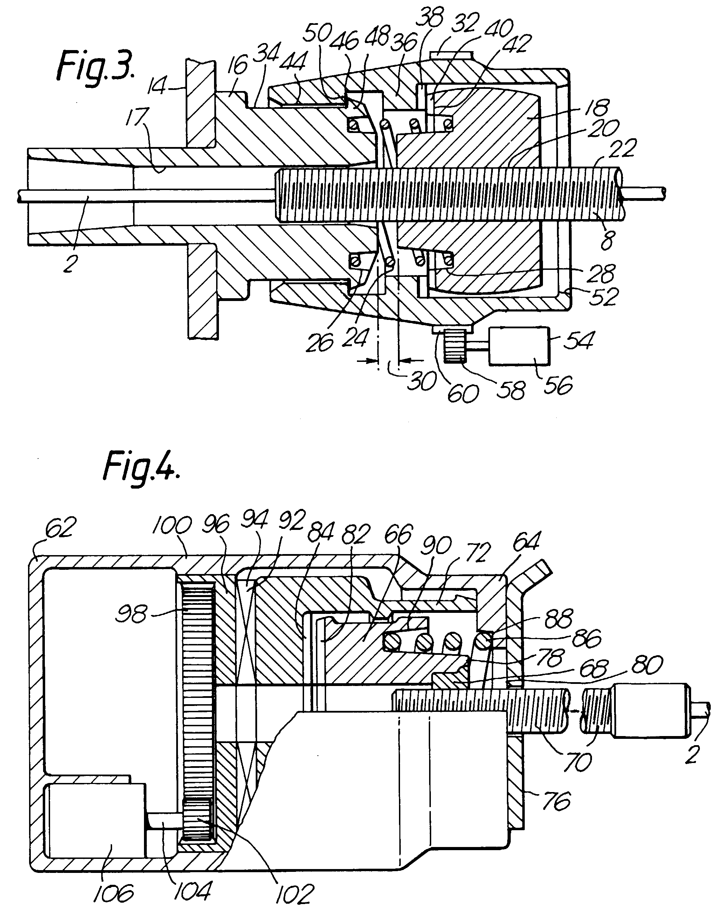

As shown in Figure 3, an annular end face 46 on a collar 48 of the flanged end piece 16 engages an annular end face 50 on the second inwardly directed shoulder 44 to limit axial travel of the sleeve 32 relative to the flanged end piece 16. The adjuster device 12 and sleeve 32 are dimensioned such that, in the position shown in Figure 3 with the annular end faces 46 and 50 in abutment and the radial teeth 38 and 40 just out of mesh, the gap 30 corresponds to the pre-determined dimension .

In service, in conjunction with a vehicle clutch as previously, as clutch plate wear occurs, the effective lengthening of the inner core 2 is compensated by reducing the gap 30 in the neutral position, the sleeve 32 being dimensioned to permit a range of movement of the adjuster nut 18 toward the flanged end piece 16. If, at any time, it is desired to set the gap 30 to the original pre-determined dimension, either following installation, other adjustment or clutch plate wear, the sleeve 32 is moved manually to bring the annular end faces 46 and 50 into abutment. If the gap 30 is then less than the original pre-determined dimension, the radial teeth 38 and 40 will enmesh and rotation of the sleeve 32 will effect rotation of the adjuster nut 18 to move the adjuster nut axially of the conduit 8 until the radial teeth 38 and 40 dis-engage upon the gap 30 reaching the pre-determined dimension.

It will be appreciated that, with the arrangement of this embodiment, movement of the adjuster nut 18 to a position in which the pre-determined dimension of the gap 30 is exceeded will not normally be possible, since the sleeve 32 limits access to the adjuster nut 18. As a further safeguard, an inwardly directed lip 52 formed on the sleeve 32 provides a limit on axial movement between the adjuster nut 18 and the sleeve 32, axial movement of the sleeve 32 in turn being limited by abutment of the annular faces 46 and 50.

Since the teeth 38 and 40 will tend to ride over each other immediately prior to dis-engagement, this will be sensed and heard by the operator as a check that the gap 30 has been re-established at the pre-determined dimension.

As indicated in Figure 3 a drive means 54 is connected to the sleeve 32 and the sleeve 32 is spring loaded to bias the annular faces 46 and 50 toward each other. The drive means is activated either continuously or at intervals - which may be determined by time, mileage, operating cycles or clutch plate wear - to rotate the sleeve 32 for a short duration. This will re-establish the gap 30 at the pre-determined dimension without danger of over-adjustment, since the radial teeth 38 and 40 dis-engage, as explained above.

As shown in Figure 3, the drive means includes an electrical motor 56 driving through a pinion 58 splined to the sleeve 32 and energised at pre-selected intervals. Alternatively, a rack, pinion and worm drive activated by movement of the operating pedal or vehicle clutch connection may be utilised. As a further alternative, the drive may be through a step-down gearing from an associated rotating component, such as a tachometer drive connection.

It will be appreciated that forms of intermeshing protuberances such as axial pegs or rectangular dogs may be utilised rather than the intermeshing radial teeth 38 and 40.

Whilst the foregoing embodiments have been described with the adjuster device 12 serving as a termination for the conduit 8, it will be appreciated that the adjuster device 12 may be positioned at an intermediate position in a control cable run with a further length of conduit secured to the flanged end piece 16 and having a fixed termination remote from the flanged end piece, thereby obviating the need to locate the flanged end piece on a bulkhead.

Furthermore, it will be understood that the device may readily be adapted for connection to the inner core of a control cable run, either within an enlarged portion of the conduit or at a termination of the run.

Referring to Figure 4 there is shown an adjuster device 62 for use in conjunction with control cable runs in which it is desired to compensate for effective lengthening of the inner core as a result of wear in an associated component, such as brake pad wear.

The adjuster device 62 includes an end piece 64 arranged to engage with a handbrake lever mechanism (not shown) and an adjuster nut 66 provided with a threaded insert 68 co-acting with a threaded termination 70 secured against rotation on the inner core 2. A sleeve 72 extends intermediate the adjuster nut 66 and the end piece 64. An end face 78 on the adjuster nut 66, upon applying an actuating tension loading, abuts an inner face 80 of the end piece plate 76 . Intermeshable sets of radial teeth 82, 84 are provided on adjoining end faces of the adjuster nut 66 and the sleeve 72. A compression spring 86 seats in circular grooves 88, 90 in the end piece 64 and the adjuster nut 66 end acts to urge the adjuster nut away from the end piece, thereby applying tension to the inner core 2 by reacting against the brake pad actuating mechanism. An outer end face of the sleeve 72 is formed with a further set of radial teeth 92 arranged in constant mesh with a set of radial teeth 94 formed upon a base 96 of an internal gear ring 98 rotatably located in a tubular extension 100 of the end piece 64. A pinion 102 meshing with the internal gear ring 98 is mounted on a drive shaft 104 of drive means 108 in the form of an electrical motor 106 secured in the tubular extension 100.

In service, upon applying an actuating tension loading to the inner core, for example by actuating a handbrake lever, the loading is transmitted through the adjuster nut 66 to the threaded insert 68 which is thereby moved axially such that the end face 78 of the adjuster nut abuts the inner face 80 of the end piece plate 76 and the movement is transmitted to the inner core 2. The resultant movement of the inner core 2 actuates the brake pad mechanism. As wear of the brake pad occurs, the inner core 2 will tend to go slack on the return stroke, whereupon the effect of the compression spring 86 will urge the sets of radial teeth 82, 84 into engagement. Upon energising the electrical motor 106 rotation of the sleeve 72 and the associated set of radial teeth 84 will be effected. The adjuster nut 66 will similarly be rotated, for so long as the two sets of radial teeth 82, 84 are in mesh, to move the threaded insert 68 axially of the threaded termination 70, which is restrained against rotation. As slack is taken up, so the effect of the compression spring 86 will be reacted and two sets of radial teeth 82, 84 will move out of mesh to restore the brake pad clearance to a required dimension.

The device may also be utilised in conjunction with other forms of control cable runs including runs in which the inner core rotates within the conduit, such as a tachometer drive, and runs in which the conduit or the inner member or both have rigid portions adjacent the adjuster device.

## Claims

1. A control cable assembly including a control cable run comprising conduit means (8) and inner member means (2) and provided with an adjuster device having an adjuster member connected through co-acting serrations (20,22;68,70) to permit adjustment of the effective length of the conduit means (8) relative to the effective length of the inner member means (2), including an adjuster nut (18,66) having a threaded portion (20,68) connected to a threaded portion (22,70) of the control cable run, an end piece (16,64) making a sliding fit on a portion of the control cable run arranged to react through the adjuster nut (18,66) an axial loading on the control cable run, the adjuster nut (18,66) and the end piece (16,64) being biassed apart so as to provide an initial gap (30) between the adjuster nut (18,66) and the end piece (18,64) when the control cable run is not transmitting a loading, characterised in that a sleeve (32,72) rotatably and slidably co-acting with the adjuster nut (18,66) and the end piece (16, 64) limits relative axial displacement of the adjuster nut from the end piece and is formed with an internal shoulder (36) provided with means (38,82) arranged to drivingly contact means (40,84) provided on the adjuster nut (18) to transmit a rotational force from the sleeve to the adjuster nut (18).

2. A control cable assembly as claimed in Claim 1 characterised in that axial travel of the sleeve (32) relative to the end piece (16) is limited by a further internal shoulder (44) formed on the sleeve being arranged to engage a collar (50) formed on the end piece such that at the limit of axial travel the adjuster nut (18) is axially spaced from the end piece (16) by a predetermined dimension (30) and with continued rotation of the sleeve, the respective means (38,40) are out of driving contact.

3. A control cable assembly as claimed in CLaim 1 or Claim 2, characterised in that the sleeve (32) is formed with a circular, external, gear track (60) engaged by a drive pinion (58) on a drive means (54).

4. A control cable assembly as claimed in Claim 1 or Claim 2, characterised in that the sleeve (72) is connected with circular, internal, gear track (98) engaged by a drive pinion (102) on a drive means (108).

5. A control cable assembly as claimed in Claim 3 or Claim 4, characterised in that the drive means comprises an electrical motor (56, 106).

6. A control cable assembly as claimed in Claim 3, Claim 4 or Claim 5, characterised in that the drive means is energisable at pre-selected intervals.

7. A control cable assembly as claimed in any preceding claim, characterised in that a compression spring (24,86) is interposed intermediate the end piece (16,64) and the adjuster nut (18,66) and adjoining end faces of the adjuster nut and the end piece are formed with corresponding circular grooves (26,28;88,90) forming seats for the compression spring.

8. A control cable assembly as claimed in any preceding claim, characterised in the end piece (16) is formed with a shoulder adapted to seat on a fixed abutment (14).

## Patentansprüche

1. Seilzug mit folgenden Merkmalen:
eine Seilzugbahn weist eine Führungseinrichtung (8) und eine Einrichtung (2) mit innerem Element auf und ist mit einer Einstellvorrichtung versehen, die ein Einstellteil umfaßt, welches über zusammenarbeitende Verzahnungen oder Wellungen (20, 22; 68, 70) angeschlossen ist, um die effektive Länge der Führungseinrichtung (8) relativ zur effektiven Länge der Einrichtung (2) mit innerem Element einstellen zu können;
die Einstelleinrichtung umfaßt eine Einstellmutter (18, 66), die ein mit einem Gewindeteil (22, 70) der Seilzugbahn verbundenes Gewindeteil (20, 68) aufweist, und ein Endstück (16, 64), das mit Gleitpassung auf einem Teil der Seilzugbahn sitzt und dazu angeordnet ist, über die Einstellmutter (18, 66) zu reagieren und eine axiale Belastung auf die Seilzugbahn aufzubringen; die Einstellmutter (18, 66) und das Endstück (16, 64) sind voneinander weg vorgespannt, um für einen anfänglichen Spalt (30) zwischen der Einstellmutter (18, 66) und dem Endstück (16, 64) zu sorgen, wenn die Seilzugbahn keine Last überträgt,
dadurch gekennzeichnet,
daß eine Muffe (32, 72) mit der Einstellmutter (18, 66) drehbar und verschieblich zusammenarbeitet und das Endstück (16, 64) die relative axiale Verschiebung der Einstellmutter von dem Endstück begrenzt und mit einem inneren Bund oder einer Schulter (36) geformt ist, die mit einer Einrichtung (38, 82) versehen ist, die zum Antriebskontakt mit einer Einrichtung (40, 84) angeordnet ist, welche an der Einstellmutter (18) vorgesehen ist, um die Drehkraft von der Muffe auf die Einstellmutter (18) zu übertragen.

2. Seilzug nach Anspruch 1,
dadurch gekennzeichnet, daß der axiale Weg der Muffe (32) relativ zu dem Endstück (16) durch einen weiteren inneren Bund oder eine weitere Schulter (44) begrenzt wird, die an der Muffe ausgebildet ist und zur Anlage an eine Ringwand (50) des Endstücks angeordnet ist, so daß an der Grenze des axial zurückgelegten Weges die Einstellmutter (18) von dem Endstück (16) um eine vorbestimmte Abmessung (30) axial entfernt ist und bei fortdauernder Drehung der Muffe die jeweiligen Einrichtungen (38, 40) außer Antriebskontakt geraten.

3. Seilzug nach Anspruch 1 oder 2,
dadurch gekennzeichnet, daß die Muffe (32) mit einer kreisförmigen äußeren Verzahnungsbahn (60) versehen ist, in die ein Antriebsritzel (58) einer Antriebseinrichtunc (54) eingreift.

4. Seilzug nach Anspruch 1 oder 2,
dadurch gekennzeichnet, daß die Muffe (72) mit einer kreisförmigen inneren Verzahnungsbahn (98) verbunden ist, die durch ein Antriebsritzel (102) einer Antriebseinrichtung (108) in Eingriff steht.

5. Seilzug nach Anspruch 3 oder 4,
dadurch gekennzeichnet, daß die Antriebseinrichtung einen Elektromotor (56, 106) umfaßt.

6. Seilzug nach Anspruch 3, 4 oder 5,
dadurch gekennzeichnet, daß die Antriebseinrichtung in vorgewählten Intervallen erregbar ist.

7. Seilzug nach einem der vorhergehenden Ansprüche,
dadurch gekennzeichnet, daß eine Druckfeder (24, 86) zwischen dem Endstück (16, 64) und der Einstellmutter (18, 66) gefügt ist und daß angrenzende Endflächen der Einstellmutter und des Endstücks mit entsprechenden kreisförmigen Nuten (26, 28; 88, 90) ausgebildet sind, welche die Sitze für die Druckfeder bilden.

8. Seilzug nach einem der vorhergehenden Ansprüche,
dadurch gekennzeichnet, daß das Endstück (16) mit einer Schulter ausgebildet ist, die an einem festen Anschlag (14) anliegen kann.

## Revendications

1. Ensemble de câble de commande comportant une longueur de câble de commande comprenant un conduit (8) et un organe interne (2) et doté d'un dispositif de réglage comportant un organe de réglage raccordé via des pas de vis en coopération (20, 22; 68,70) afin de permettre le réglage de la longueur effective du conduit (8) par rapport à la longueur effective de l'organe interne (2), comprenant un écrou de réglage (18, 66) comportant une portion taraudée (20, 68) reliée à une portion filetée (22, 70) de la longueur de câble de commande, une pièce d'extrémité (16, 64) formant un ajustement glissant sur une portion de la longueur de câble de commande agencée pour réagir via l'écrou de réglage (18, 66) à une charge axiale sur la longueur de câble de commande, l'écrou de réglage (18, 66) et la pièce d'extrémité (16, 64) étant sollicités loin l'un de l'autre afin de former un espace initial (30) entre l'écrou de réglage (18, 66) et la pièce d'extrémité (16, 64) lorsque la longueur de câble de commande ne transmet pas de charge, caractérisé en ce qu'un manchon (32, 72) coopérant à rotation et à glissement avec l'écrou de réglage (18, 66) et la pièce d'extrémité (16, 64) limite le déplacement axial relatif de l'écrou de réglage depuis la pièce d'extrémité et est doté d'un épaulement interne (36) doté d'un moyen (38, 82) agencé pour contacter à entraînement un moyen (40, 84) situé sur l'écrou de réglage (18) afin de transmettre une force de rotation du manchon à l'écrou de réglage (18).

2. Ensemble de câble de commande selon la revendication 1, caractérisé en ce que le déplacement axial du manchon (32) par rapport à la pièce d'extrémité (16) est limité par un autre épaulement interne (44) formé sur le manchon, ledit épaulement étant agencé pour engager une collerette (50) formée sur la pièce d'extrémité (16) de manière qu'à la limite du déplacement axial, l'écrou de réglage (18) soit espacé axialement de la pièce d'extrémité (16) d'une distance prédéterminée (30) et avec la poursuite de la rotation du manchon, les moyens respectifs (38, 40) soient hors de contact d'entraînement.

3. Ensemble de câble de commande selon la revendication 1 ou 2, caractérisé en ce que le manchon (32) est doté d'une voie de roulement à denture (60), circulaire, externe, engagée par un pignon d'entraînement (58) sur un moyen d'entraînement (54).

4. Ensemble de câble de commande selon la revendication 1 ou 2, caractérisé en ce que le manchon (72) est relié à une voie de roulement à denture (98) circulaire, interne, engagée par un pignon d'entraînement (102) sur un moyen d'entraînement (108).

5. Ensemble de câble de commande selon la revendication 3 ou 4, caractérisé en ce que le moyen d'entraînement comprend un moteur électrique (56, 106).

6. Ensemble de câble de commande selon la revendication 3, 4 ou 5, caractérisé en ce que le moyen d'entraînement peut être actionné à des intervalles pré-sélectionnés.

7. Ensemble de câble de commande selon l'une quelconque des revendications précédentes, caractérisé en ce qu'un ressort de compression (24, 86) est disposé entre la pièce d'extrémité (16, 64) et l'écrou de réglage (18, 66) et les faces d'extrémité adjacentes de l'écrou de réglage et de la pièce d'extrémité sont dotées de gorges circulaires correspondantes (26, 28; 88, 90) formant des sièges pour le ressort de compression.

8. Ensemble de câble de commande selon l'une quelconque des revendications précédentes, caractérisé en ce que la pièce d'extrémité (16) est dotée d'un épaulement adapté à se placer sur une butée fixe (14).
